# EUROPEAN PATENT SPECIFICATION

(11) **EP 0 501 174 B1**
(45) Date of publication and mention of the grant of the patent: **05.06.1996**
(21) Application number: 92101740.6
(22) Date of filing: 03.02.1992
(51) Int. Cl.: C09J 61/24, C09J 161/24

(54) **Hardening composition for urea-formaldehyde glues, process for its preparation and kit comprising it**
Härterzusammensetzung für Klebstoffe basierend auf Harnstoff-Formaldehydharzen; Verfahren zur Herstellung und Satz diese Zusammensetzung enthaltend.
Composition durcissante pour adhésifs à base de résines urée-formaldéhyde; procédé de préparation et coffret contenant cette composition

(30) Priority: 08.02.1991 IT TO910077
(43) Date of publication of application: 02.09.1992
(73) Proprietor: National Starch and Chemical Investment Holding Corporation, Wilmington, Delaware 19809 (US)
(72) Inventor: Pinciroli, Alberto, I-20020 Busto Garolfo (Milano) (IT)
(74) Representative: Hagemann, Heinrich, Dr.rer.nat., Dipl.-Chem.

(56) References cited:
- DE-A- 2 820 395
- DE-A- 3 008 218
- FR-A- 2 373 577
- GB-A- 1 567 033
- US-A- 4 018 959
- US-A- 4 506 060

## Description

The present invention relates to a hardening composition for urea-formaldehyde glues, to a process for its preparation and to a kit for its use together with urea-formaldehyde glues.

There are known hardening compositions based on aqueous solutions of an ammonium salt, particularly ammonium chloride, which act as a catalyst for polymerization reactions of urea-formaldehyde glues.

Thus, US-A-4 506 060 discloses a binder composition which comprises a urea-formaldehyde resin and polyvinylacetate polymers. Ammonium sulfate and/or chloride are stated to be suitable curing catalysts. However, the binder composition according to US-A-4 506 060 suffers from poor curing rate and water resistance.

It is an object of the present invention to provide a hardening composition for urea-formaldehyde glues which composition improves the use properties of the polymerized glue, such as the adhesiveness, water resistance etc., while maintaining the hardening capacity substantially unchanged.

This object is achieved by a hardening composition of the above indicated type which is characterized in that it also comprises in emulsion with the ammonium salt solution, a resin deriving from the polymerization of one or more vinyl esters or of one or more vinyl esters and other monomers containing the vinyl group with at least one post-crosslinking monomer, said resin being able to cross-link in acidic surrounding.

Preferred post-crosslinking monomers are for example N-methylolacrylamide or tri-allylcyanurate. These reactive groups further control the cross-linking of the vinyl resin by attaching to the polymer chains of the urea-formaldehyde glue.

Examples of preferred vinyl resins are polyvinyl acetate, ethylene vinylacetate and polyvinyl propionate.

The presence of the vinyl resin in the emulsion improves the properties of pore filling, adhesion and water resistance of the polymerized glue after the addition of the hardening composition. The latter further guarantees a rapid hardening of the glue when the glue is brought together with the hardening composition at a temperature of about 100°.

In a preferred embodiment of the invention the hardening composition further comprises an antifoaming agent in adequate amount to avoid the formation of air bubbles therein.

Thus the composition is suitable for the use in automatic pumping and dosage systems which are currently used in the preparation of glue mixtures.

According to a preferred embodiment of the invention the hardening composition comprises a metal salt having acidic reactivity which acts as a catalyst for the cross-linking of the vinyl resin and, together with the ammonium salt, as a co-catalyst for the polymerization of the urea-formaldehyde adhesive. Such salts, which are generally good electrolytes, have the further advantage of rendering the hardening composition suitable to be heated by high frequency radiations.

Among the metal salts the preferred compounds are zinc chloride, chromium nitrate, aluminum nitrate and, in particular, aluminum chloride.

According to a preferred embodiment of the invention, the hardening composition further comprises an inorganic filler showing stability in acidic surrounding. Examples of such fillers are calcium sulfate, barium sulfate and preferably kaolin.

The inorganic filler, particularly kaolin, reinforces the achieved glue joints. Being compatible with the other ingredients, it further allows the compositon to be stored for long periods of time of at least up to six months.

In a further preferred embodiment of the invention the hardening composition also comprises urea.

The presence of this latter additive allows to control the catalytic activity of the ammonium salt during the polymerization of the glue. Urea, in particular, reduces this activity at room temperature or slightly higher temperatures, so that the mixture of hardener and glue may be applied without hurry to the surfaces to be adhered, while there is no decrease of catalytic activity at temperatures around 100°, at which the polymerization is usually carried out.

A further object of the present invention is a kit, comprising, separated from each other, a hardening composition of any one of the above described types and a urea-formaldehyde glue, which are to be mixed at the moment of use, the weight ratio between the hardening composition and the glue being between 0.15 and 0.30 and preferably 0.20.

A further object of the present invention is a process for the preparation of a hardening composition of the above described type, characterized in that it comprises the successive additions into a stirred vessel of the following ingredients: an aqueous emulsion of a cross-linking vinyl resin, an antifoaming agent, optionally an aqueous solution of a metal salt having acidic reactivity, an ammonium salt and water for its dissolution, and optionally urea, that optionally an inorganic filler is added to the other ingredients in two distinct steps after the addition of the aqueous solution of the aluminum chloride and of the urea, and that stirring is continued for 15 to 20 minutes after the addition of all ingredients has been completed.

In a preferred embodiment of the above indicated process, an aqueous solution of an ammonium salt is prepared in advance by dissolving the ammonium salt in water which had been preheated to a temperature between 40 and 55°, whereupon said solution is added to the other ingredients.

In particular, it was found to be advantageous to prepare hardening compositions of the following type by adding the ingredients in the indicated order:

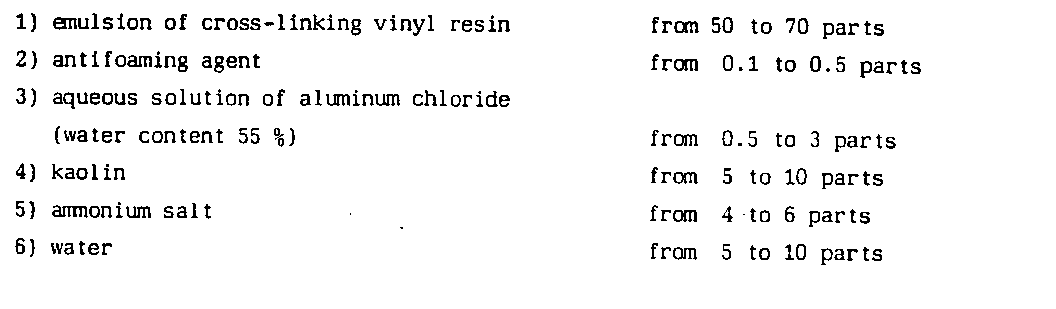

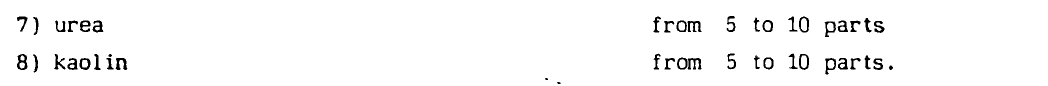

As indicated above, it is preferred to first dissolve the ammonium chloride in water (ingredients 5 and 6) and to then add the so prepared solution to the other ingredients in the indicated order. Kaolin is added in two distinct steps in order to enhance mixing with the other ingredients.

The essential properties of the obtained compositions are indicated in the following table:

**Table I**

| | |
|---|---|
| Epprecht viscosity | 700 to 3000 mPa.s |
| Brookfield viscosity | 1500 to 7000 mPa.s |
| pH | 3 to 3.5 |
| solids content | 55 to 65 % |
| specific weight | 1.15 ± 0.1 |

It is important that the final pH-value of the composition stabilizes around at the above indicated values, because lower values may cause the hydrolysis of the vinyl resin, while higher values impair the subsequent polymerization reactions.

Further advantages and characteristics of the present invention will become apparent from the examples given below which examples are considered to be non-limiting.

### Example 1

The following ingredients were added with stirring in the indicated sequence and quantities into a vessel:

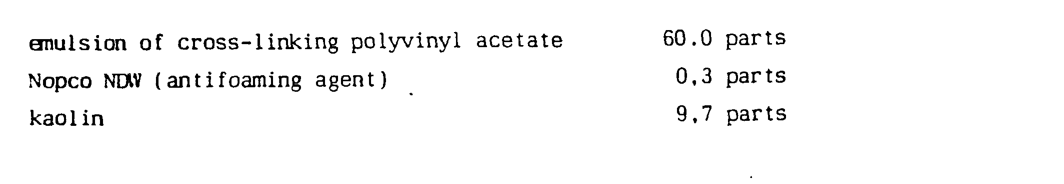

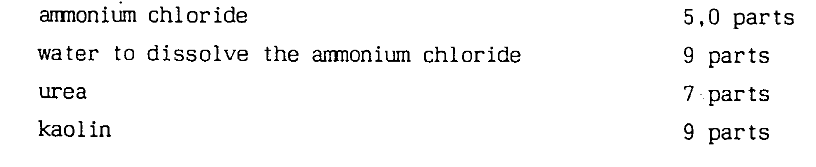

The emulsion of the cross-linking polyvinyl acetate used was VINNAPAS DPN 15 (ex Wacker Germany) and had a solids content of 50 %.

As indicated above it is preferred to separately mix the ammonium chloride and water and to then add the so prepared solution to the other ingredients. When all ingredients have been added stirring in the vessel is continued for 15 to 20 minutes.

### Example 2

The employed process is analogous to that of the preceding example. The following ingredients are used:

| | |
|---|---|
| emulsion of slightly cross-linking polyvinyl acetate | 25.48 parts |
| emulsion of highly cross-linking polyvinyl acetate | 38.22 parts |
| Nopco (antifoaming agent) | 0,3 parts |
| aqueous solution of AlCl₃ (water content 55 %) | 1.3 parts |
| kaolin | 7.7 parts |
| ammonium chloride | 5 parts |
| water | 8.00 parts |
| urea | 7.00 parts |
| kaolin | 7.00 parts |

The emulsion of slightly cross-linking polyvinyl acetate was represented by a 50/50 combination of VINNAPAS DPN 15 and conventional not cross-linking polyvinylacetate.

The emulsion of highly cross-linking polyvinyl acetate was represented by VINNAPAS DPN 15.

Both polyvinyl acetate emulsions used have a solids content of 50 %.

The following table indicates the essential physical properties of the two compositions obtained:

**Table 2**

| | Example 1 | Example 2 |
|---|---|---|
| Epprecht viscosity t=0 | 1900 mPa.s | 800 mPa.s |
| Epprecht viscosity t=5 days | 1650 mPa.s | 720 mPa.s |
| Epprecht viscosity t=16 days | 1700 mPa.s | 750 mPa.s |
| stratification after 36 days | absent | absent |
| Brookfield viscosity, 20 rpm, 20°C, t=0 | 5480 mPa.s | 1900 mPa.s |
| pH | 3.28 | 3.4 |
| solids content | 60.5 % | 58 % |
| specific weight | 1.16 | 1.14 |

Then the hardening compositions of the above described examples and a comparative hardening composition, prepared according to the prior art on the basis of ammonium chloride and without addition of an emulsion of a cross-linking vinyl resin, were separately mixed in a ratio of 20 to 100 with two resins of the liquid urea-formaldehyde type in order to evaluate the polymerization.

Of the two urea-formaldehyde resins used one had a mean reactivity and a content of free formaldehyde between 0.4 and 0.5 %, and the other had a high reactivity and a content of free formaldehyde between 1 and 1.2 %. The dry content of both urea-formaldehyde resins used was 65 ± 1 %.

The following table 3 summarizes the essential properties of the glue mixtures thus obtained.

**Table 3**

| | liquid u.f.* resin with mean reactivity (dry content about 65 %) | | | liquid u.f. resin with high reactivity (dry content about 65 ) | | |
|---|---|---|---|---|---|---|
| | comp. examp. | examp 1 | examp. 2 | comp. examp. | examp. 1 | examp. 2 |
| Epprecht visc. 20°C | 280 | 450 | 400 | 260 | 440 | 420 |
| pH | 5,4 | 4,8 | 4,7 | 5,3 | 4,6 | 4,5 |
| gelling time at 30°C | 240' | 205' | 198' | 88' | 81' | 82' |
| gelling time at 100°C | 38" | 35" | 36" | 31" | 24" | 25" |
| homogenity | good | good | good | good | good | good |
| prevention of exudation with a 6/10 veneering and a pressing temperature of 90°C | poor | good | good | good | good | good |

| | | | | | | |
|---|---|---|---|---|---|---|
| * u.f. = urea-formaldehyde | | | | | | |

Furthermore the water resistance of joints made with mixtures of adhesvies and hardining compositions of the above identified types was tested according to DIN 68705-IW67. The tests were carried out with glue mixtures consisting of the type having mean reactivity and hardening compositions according to examples 1 and 2 and the comparative example respectively. The weight ratio of the hardening compositon and the glue was 20 to 100.

Several plywood samples for testing were prepared in the laboratoy by adhering together 5 layers of beech-wood having a thickness of 1 mm. After conditioning, the samples were immersed in water at 67° for 3 hours and then subjected to a further immersion in cold water for 2 hours. The following table 4 shows the results of this test.

**Table 4**

| liquid u.f. resin with mean reactivity admixed with a hardening composition according to | water resistance according to DIN 68705-IW67 |
|---|---|
| comparative example | failure (the adhered layers separated after 15 to 20 min in warm water) |
| example 1 | fully successful |
| example 2 | satisfying (bonding force between the layers after immersion is acceptable but not as good as with the composition according to example 1) |

## Claims

1. Hardening composition for glues of the urea-formaldehyde type, comprising as polymerisation catalyst for the urea-formaldehyde resin an aqueous solution of an ammonium salt, characterized in that said composition furthermore comprises, in emulsion with said aqueous solution, a resin deriving from the polymerization of one or more vinyl esters or of one or more vinyl esters and other monomers containing the vinyl group with at least one post-crosslinking monomer.

2. Hardening composition according to claim 1, characterized in that said vinyl resin is polyvinyl acetate, ethylene vinylacetate or polyvinyl propionate.

3. Hardening composition according to claim 1, characterized in that said post-crosslinking monomer is N-methylolacrylamide or triallyl cyanurate.

4. Hardening composition according to any one of the previous claims, characterized in that the emulsion further comprises an antifoaming agent in an effective amount to avoid the formation of air bubbles.

5. Hardening composition according to any one of the previous claims, characterized in that the emulsion further comprises a metal salt having acidic reactivcity in an effective amount to catalyze the cross-linking of the vinyl resin.

6. Hardening composition according to claim 5, characterized in that the metal salt is zinc chloride, chromium or aluminum nitrate or preferably aluminum chloride.

7. Hardening composition according to any one of the previous claims, characterized in that the emulsion further comprises an inorganic filler which is stable in acidic surrounding in an effective amcunt to reinforce the glue joint.

8. Hardening composition according to claim 7, characterized in that the inorganic filler is calcium sulfate, barium sulfate or preferably kaolin.

9. Hardening composition according to any one of the previous claims, characterized in that the emulsion further comprises urea in an effective amount to control the catalytic activity of the ammonium salt.

10. Hardening composition according to any one of the previous claims, characterized in that it is obtainable by mixing the following ingredients in the indicated quantities:
- aqueous emulsion of cross-linking vinyl resin from 50 to 70 parts
- antifoaming agent from 0.1 to 0.5 parts
- aqueous solution of AlCl₃ from 0.5 to 3 parts
- kaolin from 10 to 20 parts
- aqueous solution of ammonium salt from 9 to 16 parts
- urea from 5 to 10 parts.

11. Kit, comprising, separated from each other, a composition according to any one of the previous claims and a glue of the urea-formaldehyde type, intended to be mixed at the moment of use, the weight ratio between the hardening composition and the glue being between 0.15 and 0.30.

12. Kit according to claim 11, characterized in that the weight ratio between the hardening composition and the glue is 0.2.

13. Process for the preparation of a hardening composition according to claims 1 to 10, characterized in that it comprises the successive additions into a stirred vessel of the following ingredients: an emulsion of a cross-linking vinyl resin, an antifoaming agent, optionally an aqueous solution of an aluminum salt, an aqueous solution of a metal salt having acidic reactivity, and optionally urea, that optionally an inorganic filler, which is stable in acidic surrounding, is added in two distinct steps after the addition of the aqueous solution of the aluminum chloride and the urea and that stirring is continued for 15 to 20 minutes after the addition of all ingredients has been completed.

14. Process according to claim 13, characterized in that the aqueous solution of the ammonium salt is prepared in advance by dissolving the ammonium salt in water, which had been previously heated to a temperature between 40 and 55°C, whereupon said solution of the ammonium salt is added to the other ingredients in the indicated order.

## Patentansprüche

1. Härterzusammensetzung für Klebstoffe des Harnstoff-Formaldehyd-Typs, umfassend als Polymerisationskatalysator für das Harnstoff-Formaldehyd-Harz eine wäßrige Lösung eines Ammoniumsalzes, dadurch gekennzeichnet, daß diese Zusammensetzung, in Emulsion mit der wäßrigen Lösung, ferner ein sich aus der Polymerisation eines oder mehrerer Vinylester oder eines oder mehrerer Vinylester und anderer die Vinylgruppe enthaltender Monomere mit mindestens einem nachvernetzenden Monomer ableitendes Harz umfaßt.

2. Härterzusammensetzung nach Anspruch 1, dadurch gekennzeichnet, daß das Vinylharz Polyvinylacetat, Ethylenvinylacetat oder Polyvinylpropionat ist.

3. Härterzusammensetzung nach Anspruch 1, dadurch gekennzeichnet, daß das nachvernetzende Monomer N-Methylolacrylamid oder Triallylcyanurat ist.

4. Härterzusammensetzung nach einem der vorhergehenden Ansprüche, dadurch gekennzeichnet, daß die Emulsion ferner ein Antischaummittel in einer wirksamen Menge umfaßt, um die Bildung von Luftblasen zu vermeiden.

5. Härterzusammensetzung nach einem der vorhergenden Ansprüche, dadurch gekennzeichnet, daß die Emulsion ferner ein Metallsalz mit saurer Reaktivität in einer wirksamen Menge zum Katalysieren der Vernetzung des Vinylharzes umfaßt.

6. Härterzusammensetzung nach Anspruch 5, dadurch gekennzeichnet, daß das Metallsalz Zinkchlorid, Chrom- oder Aluminiumnitrat oder vorzugsweise Aluminiumchlorid ist.

7. Härterzusammensetzung nach einem der vorhergehenden Ansprüche, dadurch gekennzeichnet, daß die Emulsion ferner einen in saurer Umgebung stabilen anorganischen Füllstoff in einer zum Verstärken der Klebstoffbindung wirksamen Menge umfaßt.

8. Härterzusammensetzung nach Anspruch 7, dadurch gekennzeichnet, daß der anorganische Füllstoff Calciumsulfat, Bariumsulfat oder vorzugsweise Kaolin ist.

9. Härterzusammensetzung nach einem der vorhergehenden Ansprüche, dadurch gekennzeichnet, daß die Emulsion ferner Harnstoff in einer wirksamen Menge umfaßt, um die katalytische Aktivität des Ammoniumsalzes zu steuern.

10. Härterzusammensetzung nach einem der vorhergehenden Ansprüche, dadurch gekennzeichnet, daß sie durch Mischen der folgenden Bestandteile in den angegebenen Mengen erhältlich ist:
| | Teile |
|---|---|
| - Emulsion des vernetzenden Vinylharzes | 50 bis 70 |
| - Antischaummittel | 0,1 bis 0,5 |
| - wäßrige Lösung von AlCl₃ | 0,5 bis 3 |
| - Kaolin | 10 bis 20 |
| - wäßrige Lösung des Ammoniumsalzes | 9 bis 16 |
| - Harnstoff | 5 bis 10. |

11. Satz, der von einander getrennt umfaßt: eine Zusammensetzung nach einem der vorhergehenden Ansprüche und einen Klebstoff des Harnstoff-Formaldehyd-Typs, die zum Mischen im Augenblick der Verwendung bestimmt sind, wobei das Gewichtsverhältnis zwischen der Härterzusammensetzung und dem Klebstoff zwischen 0,15 und 0,30 liegt.

12. Satz nach Anspruch 11, dadurch gekennzeichnet, daß das Gewichtsverhältnis zwischen der Härterzusammensetzung und dem Klebstoff 0,2 beträgt.

13. Verfahren zur Herstellung einer Härterzusammensetzung gemäß den Ansprüchen 1 bis 10, dadurch gekennzeichnet, daß es die aufeinanderfolgenden Zugaben der folgenden Bestandteile in ein Rührgefäß umfaßt: eine wäßrige Emulsion eines vernetzenden Vinylharzes, ein Antischaummittel, fakultativ eine wäßrige Lösung eines Aluminiumsalzes, eine wäßrige Lösung eines Metallsalzes mit saurer Reaktivität und fakultativ Harnstoff, daß fakultativ ein in saurer Umgebung stabiler anorganischer Füllstoff in zwei getrennten Schritten nach der Zugabe der wäßrigen Lösung des Aluminiumchlorids und des Harnstoffes zugegeben wird und daß das Rühren 15 bis 20 min lang fortgesetzt wird, nachdem die Zugabe aller Bestandteile beendet worden ist.

14. Verfahren nach Anspruch 13, dadurch gekennzeichnet, daß die wäßrige Lösung des Ammoniumsalzes im voraus durch Lösen des Ammoniumsalzes in Wasser, das vorher auf eine Temperatur zwischen 40 und 55°C erhitzt worden ist, hergestellt wird, worauf diese Lösung des Ammoniumsalzes zu den anderen Bestandteilen in der angegebenen Reihenfolge zugefügt wird.

## Revendications

1. Composition de durcissement pour des colles du type urée-formaldéhyde, comprenant comme catalyseur de polymérisation pour la résine urée-formaldéhyde une solution aqueuse d'un sel d'ammonium, caractérisée en ce que ladite composition comprend en outre, en émulsion avec ladite solution aqueuse, une résine provenant de la polymérisation d'un ou plusieurs esters vinyliques ou d'un ou plusieurs esters vinyliques et d'autres monomères contenant le groupe vinyle avec au moins un monomère de post-réticulation.

2. Composition de durcissement suivant la revendication 1, caractérisée en ce que la résine vinylique consiste en un polymère d'acétate de vinyle, un copolymère éthylène-acétate de vinyle ou un polymère de propionate de vinyle.

3. Composition de durcissement suivant la revendication 1, caractérisée en ce que le monomère de post-réticulation consiste en N-méthylolacrylamide ou cyanurate de triallyle.

4. Composition de durcissement suivant l'une quelconque des revendications précédentes, caractérisée en ce que l'émulsion comprend en outre un agent anti-mousse en une quantité efficace pour éviter la formation de bulles d'air.

5. Composition de durcissement suivant l'une quelconque des revendications précédentes, caractérisée en ce que l'émulsion comprend en outre un sel métallique ayant une réactivité dans un environnement acide en une quantité efficace pour catalyser la réticulation de la résine vinylique.

6. Composition de durcissement suivant la revendication 5, caractérisée en ce que le sel métallique consiste en chlorure de zinc, nitrate de chrome ou nitrate d'aluminium ou, de préférence, chlorure d'aluminium.

7. Composition de durcissement suivant l'une quelconque des revendications précédentes, caractérisée en ce que l'émulsion comprend en outre une charge inorganique qui est stable dans un environnement acide, en une quantité efficace pour renforcer le joint de colle.

8. Composition de durcissement suivant la revendication 7, caractérisée en ce que la charge inorganique consiste en sulfate de calcium, sulfate de baryum ou, de préférence, kaolin.

9. Composition de durcissement suivant l'une quelconque des revendications précédentes, caractérisée en ce que l'émulsion comprend en outre de l'urée en une quantité efficace pour réguler l'activité catalytique du sel d'ammonium.

10. Composition de durcissement suivant l'une quelconque des revendications précédentes, caractérisée en ce qu'elle peut être obtenue en mélangeant les ingrédients suivants en les quantités indiquées :
- émulsion aqueuse de résine vinylique de réticulation 50 à 70 parties
- agent anti-mousse 0,1 à 0,5 partie
- solution aqueuse de AlCl₃ 0,5 à 3 parties
- kaolin 10 à 20 parties
- Solution aqueuse de sel d'ammonium 9 à 16 parties
- urée 5 à 10 parties

11. Kit comprenant comme constituants, séparés l'un de l'autre, une composition suivant l'une quelconque des revendications précédentes et une colle du type urée-formaldéhyde, destinés à être mélangés au moment de l'utilisation, le rapport pondéral de la composition de durcissement à la colle étant compris dans l'intervalle de 0,15 à 0,30.

12. Kit suivant la revendication 11, caractérisé en ce que le rapport pondéral de la composition de durcissement à la colle est égal à 0,2.

13. Procédé de préparation d'une composition de durcissement suivant les revendications 1 à 10, caractérisé en ce qu'il comprend les introductions successives dans un récipient sous agitation des ingrédients suivants : une émulsion d'une résine vinylique de réticulation, un agent anti-mousse, facultativement une solution aqueuse d'un sel d'aluminium, une solution aqueuse d'un sel métallique présentant une réactivité dans un environnement acide, et facultativement de l'urée, en ce que, facultativement, une charge inorganique, qui est stable dans un environnement acide est ajoutée en deux étapes distinctes après l'addition de la solution aqueuse du chlorure d'aluminium et de l'urée, et en ce que l'agitation est continuée pendant un temps de 15 à 20 minutes après achèvement de l'addition de tous les ingrédients.

14. Procédé suivant la revendication 13, caractérisé en ce que la solution aqueuse du sel d'ammonium est préparée à l'avance en dissolvant le sel d'ammonium dans de l'eau, qui a été préalablement chauffée à une température de 40 à 55°C, puis ladite solution du sel d'ammonium est ajoutée aux autres ingrédients dans l'ordre indiqué.
